# EUROPEAN PATENT APPLICATION

(11) **EP 3 829 219 A1**
(43) Date of publication of application: **02.06.2021**
(21) Application number: 20201596.2
(22) Date of filing: 13.10.2020
(51) Int. Cl.: H04W 36/00, H04W 74/08, H04W 84/12

(54) **SELECTIVE MULTI-LINK OPERATION IN WLAN**

(30) Priority: 26.11.2019 US 201962940591 P; 25.09.2020 US 202017032545
(71) Applicant: Apple Inc., Cupertino CA 95014 (US)
(72) Inventor: LI, Guoqing, Cupertino, California 95014 (US); KURIAN, Lawrie, Cupertino, California 95014 (US); HAQUE, Tashbeeb, Cupertino, California 95014 (US); KONDA, Sudheer, Cupertino, California 95014 (US)
(74) Representative: Simmons & Simmons

(57) **Abstract**

Some embodiments of this disclosure include apparatuses and methods for implementing selective multi-link operations for multi-link wireless communication networks. For example, some embodiments relate to an electronic device including a transceiver and a processor communicatively coupled to the transceiver. The processor communicates, using the transceiver, with a second electronic device on a first link of the wireless network. The processor determines whether a link switch condition is met and in response to determining that the link switch condition is met, communicates with the second electronic device on a second link of the wireless network. The first link is separate from the second link.

## Description

### CROSS-REFERENCE TO RELATED APPLICATIONS

The present application claims the benefit of U.S. Provisional Patent Application No. 62/940,591, filed on November 26, 2019, which is hereby incorporated by reference in its entirety.

### BACKGROUND

### Field

The described embodiments generally relate to channel access in wireless communications. For example, the embodiments of this disclosure relate to selective multi-link operation in wireless communication networks such as a wireless local area network (WLAN).

### Related Art

When a transmitting station attempts to transmit data to a receiving station on a communication channel, the transmitting station checks the channel prior to transmission to avoid collision. If the transmitting station detects (e.g., "hears") data (e.g., one or more packets) from other stations being transmitted on the channel, the transmitting station pauses its transmission of backoff data and/or new data. The transmitting station can resume its transmission after the data detected on the channel is transmitted and after a time specified in the data detected on the channel is passed. For example, the specified time can be a time indicated in a medium access control (MAC) header (e.g., a time/counter in the duration field of the MAC header - network allocation vector (NAV)) of the one or more packets.

The specified time can be as long as 32ms for some applications, so that the channel can be unavailable for a long time and the transmitting station has to wait to perform its own transmission. Such long time durations can significantly impair user experience, especially for latency-sensitive applications (e.g., audio stereo pair.) In some examples, the audio stereo pair application can have a latency requirement of about 10ms, which is less than the 32ms time that can be specified in the data detected on the channel. Accordingly, if an audio packet has to wait for the time specified in the data to expire, the audio packet will exceed its latency requirement. Additionally, in a congested environment, the channel may be occupied by other stations for a long time preventing a low latency station from transmitting in time.

### SUMMARY

Some embodiments of this disclosure include apparatuses and methods for implementing selective multi-link operation in wireless communication networks such as a wireless local area network (WLAN). The selective multi-link operation of the embodiments of this disclosure can assist the devices in the WLAN (e.g., an access point (AP), a station (STA)) to better utilize channel resources by, for example, selectively using multiple links (e.g., multiple communication channels) to reduce latency.

Some aspects of this disclosure relate to an electronic device. The electronic device includes a transceiver configured to communicate over a wireless network and a processor communicatively coupled to the transceiver. The processor communicates, using the transceiver, with a second electronic device on a first link of the wireless network. The processor determines whether a link switch condition is met and in response to determining that the link switch condition is met, communicates with the second electronic device on a second link of the wireless network. The first link is separate from the second link.

Some aspects of this disclosure relate to a method including communicating, using a transceiver of a first electronic device, with a second electronic device on a first link of a wireless network. The method further includes determining a channel reservation value associated with a detected packet on the first link and comparing the channel reservation value with a latency threshold. In response to the channel reservation value being greater than the latency threshold, communicating with the second electronic device on a second link of the wireless network. The first link is separate from the second link.

Some aspects of this disclosure relate to a non-transitory computer-readable medium storing instructions. When the instructions are executed by a processor of an electronic device, the instructions cause the processor to perform operations including communicating, using a transceiver of the electronic device, with a second electronic device on a first link of a wireless network. The operations further include determining a channel reservation value associated with a detected packet on the first link. In response to the channel reservation value being greater than a latency threshold, communicating with the second electronic device on a second link of the wireless network, wherein the first link is separate from the second link.

Some aspects of this disclosure relate to an electronic device, The electronic device includes a transceiver configured to communicate over a wireless network and a processor communicatively coupled to the transceiver. The processor communicates with a second electronic device on a first link of a plurality of links of the wireless network during a first target wake time (TW) service period (SP) of a TWT group. The TWT group includes a plurality of TWT SPs and each of the plurality of TWT SPs is associated with a corresponding one of the plurality of links. In response to determining that a link switch condition is met, the processor communicates with the second electronic device on a second link of the plurality of links during a second TWT SP of the TWT group.

Some aspects of this disclosure relate to an electronic device, The electronic device includes a transceiver configured to communicate over a wireless network and a processor communicatively coupled to the transceiver. The processor communicates with a second electronic device selectively on one of a plurality of links of the wireless network during one of a plurality of target wake time (TW) service periods (SPs) of a TWT group. Each of the plurality of TWT SPs is associated with a corresponding one of the plurality of links.

This Summary is provided merely for purposes of illustrating some embodiments to provide an understanding of the subject matter described herein. Accordingly, the above-described features are merely examples and should not be construed to narrow the scope of the subject matter in this disclosure. Other features, aspects, and advantages of this disclosure will become apparent from the following Detailed Description, Figures, and Claims.

### BRIEF DESCRIPTION OF THE FIGURES

The accompanying drawings, which are incorporated herein and form part of the specification, illustrate the present disclosure and, together with the description, further serve to explain the principles of the disclosure and enable a person of skill in the relevant art(s) to make and use the disclosure.
FIG. 1A illustrates an example system implementing selective multi-link operation in a multi-link communication network, according to some embodiments of the disclosure.
FIG. 1B illustrates an example multi-link communication between two stations, according to some embodiments of the disclosure.
FIG. 2 illustrates a block diagram of an example wireless system of an electronic device implementing the selective multi-link operation for multi-link communication network, according to some embodiments of the disclosure.
FIG. 3 illustrates an example method for a wireless system supporting selective multi-link operations for a multi-link wireless communication network, according to some embodiments of the disclosure.
FIG. 4 illustrates an exemplary Target Wake Time (TWT) flow, according to some embodiments of the disclosure.
FIG. 5 illustrates an exemplary service interval flow, according to some embodiments of the disclosure.
FIG. 6 is an example computer system for implementing some embodiments or portion(s) thereof.

The present disclosure is described with reference to the accompanying drawings. In the drawings, generally, like reference numbers indicate identical or functionally similar elements. Additionally, generally, the left-most digit(s) of a reference number identifies the drawing in which the reference number first appears.

### DETAILED DESCRIPTION

Some embodiments of this disclosure include apparatuses and methods for implementing selective multi-link operation in wireless communication networks such as a wireless local area network (WLAN). The selective multi-link operation of the embodiments of this disclosure can assist the devices in the WLAN (e.g., an access point (AP), a station (STA)) to better utilize channel resources by, for example, selectively using multiple links (e.g., multiple communication channels). According to some embodiments, a link can include a communication channel on a frequency band (e.g. band).

According to some embodiments, the selective multi-link operation can be implemented with communication techniques compatible with Institute of Electrical and Electronics Engineers (IEEE) 802.11 standards (such as, but not limited to IEEE 802.11ac, IEEE 802.11ax, IEEE 802.11bc, IEEE 802.11bd, IEEE 802.11be, etc.). However, the embodiments of this disclosure can also be extended to selective multi-link operation in other multi-link communication networks.

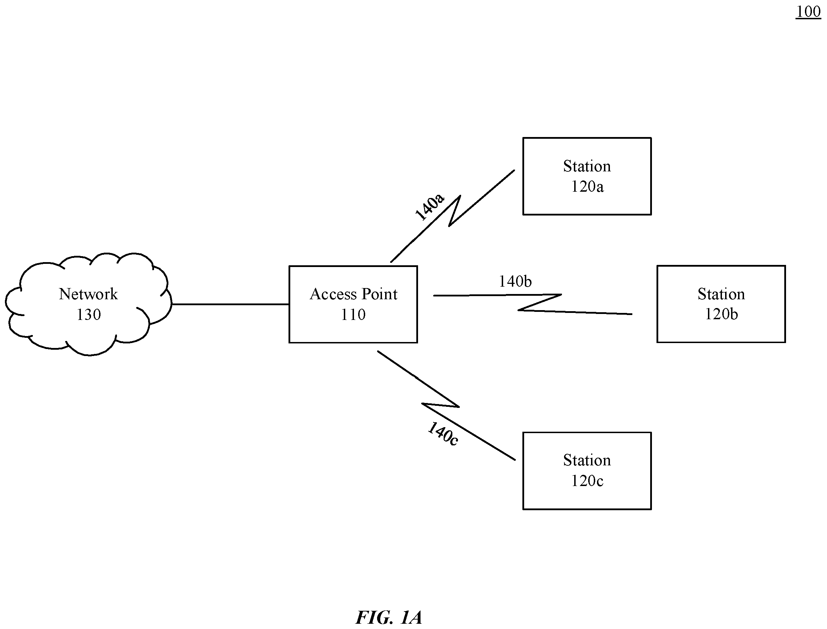

FIG. 1A illustrates an example system 100 implementing selective multi-link operation in a multi-link communication network, according to some embodiments of the disclosure. Example system 100 is provided for the purpose of illustration only and does not limit the disclosed embodiments. System 100 may include, but is not limited to, access point (AP) 110, stations (STA) 120, and network 130. Stations 120a-120c may include, but are not limited to, Wireless Local Area Network (WLAN) stations such as wireless communication devices, smart phones, laptops, desktops, tablets, personal assistants, monitors, televisions, wearable devices, and the like. Access point (AP) 110 may include but is not limited to WLAN electronic devices such as a wireless router, a wearable device (e.g., a smart watch), a wireless communication device (e.g., a smart phone), or a combination thereof. Network 130 may be the Internet and/or a WLAN. Station 120's communications are shown as wireless communications 140. The communication between AP 110 and STA 120 can take place using wireless communications 140a-140c. The wireless communications 140a-140c can be based on a wide variety of wireless communication techniques. These techniques can include, but are not limited to, techniques based on IEEE 802.11 (such as, but not limited to IEEE 802.11ac, IEEE 802.11ax, IEEE 802.11bc, IEEE 802.11bd, IEEE 802.11be, IEEE 802.11v, etc. standards).

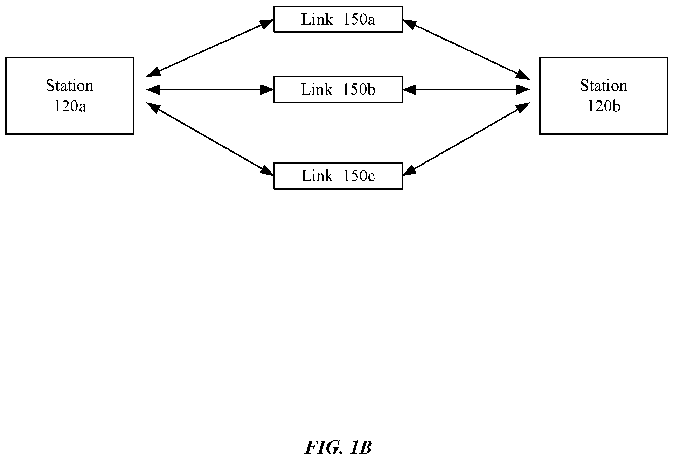

According to some embodiments, AP 110 and STAs 120 are configured to implement a multi-link communication. In other words, AP 110 and STAs 120 are configured to implement and support data transfer by concurrently or selectively using multiple PHY links. For example, FIG. 1B illustrates an example multi-link communication between two stations, according to some embodiments of the disclosure.

As illustrated in FIG. 1B, STA 120a and STA 120b can communicate with each other using multiple links 150a-150c. In other words, STAs 120a and 120b can selectively chose between one or more of the multiple PHY links 150a-150c to transfer data. Although three links 150 are illustrated, the embodiments of this disclosure are not limited to this example and any number of links 150 can be implemented. The links 150 can include different wireless communication channels, according to some embodiments. For example, each wireless channel/link 150 can be defined based on its respective frequency that is different and separate from the others. For example, a first link (e.g., link 150a) can be associated with 2.4 GHz wireless communication channel. For example, a second link (e.g., link 150b) can be associated with 5 GHz wireless communication channel. For example, a third link (e.g., link 150c) can be associated with 6 GHz wireless communication channel. However, the embodiments of this disclosure are not limited to these wireless channels and other PHY layer links and/or other wireless channels can be used as links 150 for communication between STAs 120a and 120b.

In some embodiments, the communication between STAs 120a and 120b (and links 150) is direct communication (and direct links) between these STAs. Additionally, or alternatively, the communication between STAs 120a and 120b (and links 150) is through AP 110. In this example, wireless communications 140a and 140b, as shown in FIG. 1A, can include links 150a-150c of FIG. 1B. Also, although links 150a-150c are shown as links between STAs 120a and 120b, the embodiments of this disclosure are not limited to this example. In some embodiments, the multi-link communication can be between AP 110 and a STA 120. Additionally, or alternatively, the multi-link communication can be between two APs.

According to some aspects of this disclosure, one or both of STA 120a and STA 120b can have multiple radio capability. The transmitting station (e.g., STA 120a) can be configured to switch to different channels under switch trigger conditions. In this disclosure, five exemplary modes of selective multi-link operation are discussed. However, the aspects of this disclosure are not limited to these modes and other modes of selective multi-link operation and/or any combination of these modes can be used. In some examples, a resident link (e.g., a resident channel) can be the main link that is used for the communication between STA 120a and STA 120b (e.g., a default link absent a switch condition). Alternative link(s) can include the link(s) that is used as an alternative/back up link for the communication between STA 120a and STA 120b.

According to some examples, a first mode of selective multi-link operation can include an independent selective mode. In this mode of selective multi-link operation, a transmitting STA (e.g., STA 120a) can use its own criteria/conditions for switching between different links. In some examples, no signaling associated with this mode occurs between the transmitting STA (e.g., STA 120a) and the receiving STA (e.g., STA 120b) prior to and regarding the implementation of the mode. In some examples of the first mode of selective multi-link operation, the transmitting STA (e.g., STA 120a) includes one or more transceivers configured to operate concurrently or selectively on multiple links. In some examples of the first mode of selective multi-link operation, the receiving STA (e.g., STA 120b) includes one or more transceivers configured to operate concurrently or selectively on multiple links. In some examples, the one or more transceivers of the receiving STA are awake (e.g., in active mode) during the communication between the transmitting and receiving STAs.

According to some examples, a second mode of selective multi-link operation can include a basic collaborative selective mode. In this mode of selective multi-link operation, STA 120a and STA 120b can communicate information to configure how and/or when the link switch(es) occurs. In some examples of the second mode of selective multi-link operation, the transmitting STA (e.g., STA 120a) includes one or more transceivers configured to operate concurrently or selectively on multiple links. In some examples of the second mode of selective multi-link operation, the receiving STA (e.g., STA 120b) includes one or more transceivers configured to operate concurrently or selectively on multiple links. In some examples, the one or more transceivers of the receiving STA are awake (e.g., in active mode) during the communication between the transmitting and receiving STAs.

According to some examples, a third mode of selective multi-link operation can include a non-scheduled power-save selective mode. In this mode of selective multi-link operation, the receiving STA (e.g., STA 120b) can be asleep (e.g., in power save mode) on alternative link(s) most of the time and can be woken by, for example, an out-of-band signaling (e.g., one or more out-of-band packets) in response to a link switch that is about to occur at STA 120a. In other words, in some examples of the third mode of selective multi-link operation, the receiving STA (e.g., STA 120b) includes one or more transceivers configured to operate concurrently or selectively on multiple links. In some examples, the transceiver(s) of the receiving STA associated with the alternative link(s) are asleep (e.g., in power save mode) during the communication between the transmitting and receiving STAs using the resident link. The transceiver(s) of the receiving STA associated with the alternative link(s) can be woken (e.g., switch to active mode) by, for example, the out-of-band signaling indicating that the data transmission is to be on the alternative link.

According to some examples, a fourth mode of selective multi-link operation can include a scheduled power-save selective mode. In this mode of selective multi-link operation, STA 120a and STA 120b can agree on a time window for STA 120a (e.g., the transmitting STA) and/or STAT 120b (e.g., the receiving STA) to sleep on resident and alternative links. STA 120a can switch links to transmit data (e.g., packets) during the time window associated with the corresponding link.

According to some examples, a fifth mode of selective multi-link operation can include a selective transmission for a single radio device. In this mode of selective multi-link operation, one or more of STA 120a (e.g., the transmitting STA) or STA 120b (e.g., the receiving STA) has a single radio, where the single radio is able to be tuned to different channels. STA 120a and STA 120b can agree on a switching condition and time to keep synchronized on the resident and alternative links.

The embodiments of this disclosure, as discussed in more detail below, assist STAs 120a and 120b to better utilize channel resources by, for example, selectively use one of the multiple links. In some aspects of this disclosure, a transmitting STA can determine the wait time on each of the multiple links and selectively use a link with the lowest wait time to transmit its data to the receiving STA.

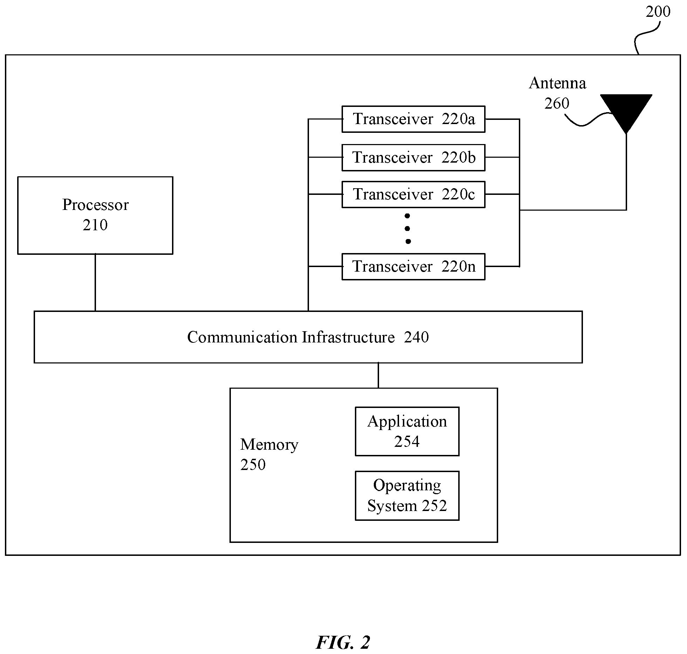

FIG. 2 illustrates a block diagram of an example wireless system 200 of an electronic device implementing the selective multi-link operation for multi-link communication network, according to some embodiments of the disclosure. System 200 may be any of the electronic devices (e.g., AP 110, STA 120) of system 100. System 200 includes processor 210, one or more transceivers 220a-220n, communication infrastructure 240, memory 250, operating system 252, application 254, and antenna 260. Illustrated systems are provided as exemplary parts of wireless system 200, and system 200 can include other circuit(s) and subsystem(s). Also, although the systems of wireless system 200 are illustrated as separate components, the embodiments of this disclosure can include any combination of these, less, or more components.

Memory 250 may include random access memory (RAM) and/or cache, and may include control logic (e.g., computer software) and/or data. Memory 250 may include other storage devices or memory such as, but not limited to, a hard disk drive and/or a removable storage device/unit. According to some examples, operating system 252 can be stored in memory 250. Operating system 252 can manage transfer of data from memory 250 and/or one or more applications 254 to processor 210 and/or one or more transceivers 220a-220n. In some examples, operating system 252 maintains one or more network protocol stacks (e.g., Internet protocol stack, cellular protocol stack, and the like) that can include a number of logical layers. At corresponding layers of the protocol stack, operating system 252 includes control mechanism and data structures to perform the functions associated with that layer.

According to some examples, application 254 can be stored in memory 250. Application 254 can include applications (e.g., user applications) used by wireless system 200 and/or a user of wireless system 200. The applications in application 254 can include applications such as, but not limited to, Siri™, FaceTime™, radio streaming, video streaming, remote control, and/or other user applications.

System 200 can also include communication infrastructure 240. Communication infrastructure 240 provides communication between, for example, processor 210, one or more transceivers 220a-220n, and memory 250. In some implementations, communication infrastructure 240 may be a bus. Processor 210 together with instructions stored in memory 250 performs operations enabling wireless system 200 of system 100 to implement the selective multi-link operations as described herein. Additionally, or alternatively, one or more transceivers 220a-220n perform operations enabling wireless system 200 of system 100 to implement the selective multi-link operations as described herein.

One or more transceivers 220a-220n transmit and receive communications signals that support the selective multi-link operation, according to some embodiments, and may be coupled to antenna 260. Antenna 260 may include one or more antennas that may be the same or different types. One or more transceivers 220a-220n allow system 200 to communicate with other devices that may be wired and/or wireless. In some examples, one or more transceivers 220a-220n can include processors, controllers, radios, sockets, plugs, buffers, and like circuits/devices used for connecting to and communication on networks. According to some examples, one or more transceivers 220a-220n include one or more circuits to connect to and communicate on wired and/or wireless networks.

According to some aspects of this disclosure, one or more transceivers 220a-220n can include a cellular subsystem, a WLAN subsystem, and/or a Bluetooth™ subsystem, each including its own radio transceiver and protocol(s) as will be understood by those skilled arts based on the discussion provided herein. In some implementations, one or more transceivers 220a-220n can include more or fewer systems for communicating with other devices.

In some examples, one or more transceivers 220a-220n can include one or more circuits (including a cellular transceiver) for connecting to and communicating on cellular networks. The cellular networks can include, but are not limited to, 3G/4G/5G networks such as Universal Mobile Telecommunications System (UMTS), Long-Term Evolution (LTE), and the like.

Additionally, or alternatively, one or more transceivers 220a-220n can include one or more circuits (including a Bluetooth™ transceiver) to enable connection(s) and communication based on, for example, Bluetooth™ protocol, the Bluetooth™ Low Energy protocol, or the Bluetooth™ Low Energy Long Range protocol. For example, transceiver 220n can include a Bluetooth™ transceiver.

Additionally, one or more transceivers 220a-220n can include one or more circuits (including a WLAN transceiver) to enable connection(s) and communication over WLAN networks such as, but not limited to, networks based on standards described in IEEE 802.11 (such as, but not limited to IEEE 802.11ac, IEEE 802.11ax, IEEE 802.11bc, IEEE 802.11bd, IEEE 802.11be, etc.). For example, transceiver 220a can enable connection(s) and communication over a multi-link WLAN network having a first link (e.g., link 150a) associated with 2.4 GHz wireless communication channel. For example, transceiver 220b can enable connection(s) and communication over the multi-link WLAN network having a second link (e.g., link 150b) associated with 5 GHz wireless communication channel. For example, transceiver 220c can enable connection(s) and communication over the multi-link WLAN network having a third link (e.g., link 150c) associated with 6 GHz wireless communication channel. However, the embodiments of this disclosure are no limited to these wireless channels and other PHY layer links and/or other wireless channels can be used.

Additionally, or alternatively, wireless system 200 can include one WLAN transceiver configured to operate at two or more links. Processor 210 can be configured to control the one WLAN transceiver to switch between different links, according to some examples.

According to some aspects of this disclosure, processor 210, alone or in combination with computer instructions stored within memory 250, and/or one or more transceiver 220a-220n, implements the selective multi-link operation in the multi-link communication network as discussed herein. For example, system 200 is configured to set up the selective multi-link operation mode and associated parameters. Additionally, system 200 is configured to initiate communication and/or communicate with another STA using, for example, a first link (e.g., a resident link such as link 150a). System 200 is further configured to determine whether a link switching condition is met. In response to determining that the link switching condition is met, system 200 is configured to switch the communication with the other STA from the first link to a second link (e.g., an alternative link such as link 150b).

According to some aspects of the disclosure, the switching from the first link to the second link can include using a transceiver (e.g., transceiver 220b) associated with the second link instead of the transceiver (e.g., transceiver 220a) associated with the first link. Additionally, or alternatively, the switching from the first link to the second link can include controlling a single transceiver (e.g., transceiver 220n) to operate at the frequency of the second link instead of operating at the frequency of the first link.

In some examples, after switching to the second link, system 200 can continue the communication with the other STA. This communication can include transmitting a notification to (and receiving a response from) the other STA of the transmission on the second link. The communication can further include transmitting data (e.g., one or more packets) to the other STA. After a second switch condition is met, system 200 can switch to another link. For example, after the data is successfully transmitted (and successfully received at the receiving STA), a number of retries threshold is subsequently met, and/or a time threshold is reached, causing system 200 to switch to another link. The aspect of this disclosure can include other criteria as the switch condition.

In some examples, the switching to another link can include switching back to the first link (e.g., the resident link). Alternatively, the switching to another link can include switching to a third link (e.g., a second alternative link such as link 150c.) According to some aspects of the disclosure, the switching from the second link to the first link can include using a transceiver (e.g., transceiver 220a) associated with the first link instead of the transceiver (e.g., transceiver 220b) associated with the second link. Additionally, or alternatively, the switching from the second link to the first link can include controlling a single transceiver (e.g., transceiver 220n) to operate at the frequency of the first link instead of operating at the frequency of the second link. According to some aspects of the disclosure, the switching from the second link to the third link can include using a transceiver (e.g., transceiver 220c) associated with the third link instead of the transceiver (e.g., transceiver 220b) associated with the second link. Additionally, or alternatively, the switching from the second link to the third link can include controlling a single transceiver (e.g., transceiver 220n) to operate at the frequency of the third link instead of operating at the frequency of the second link.

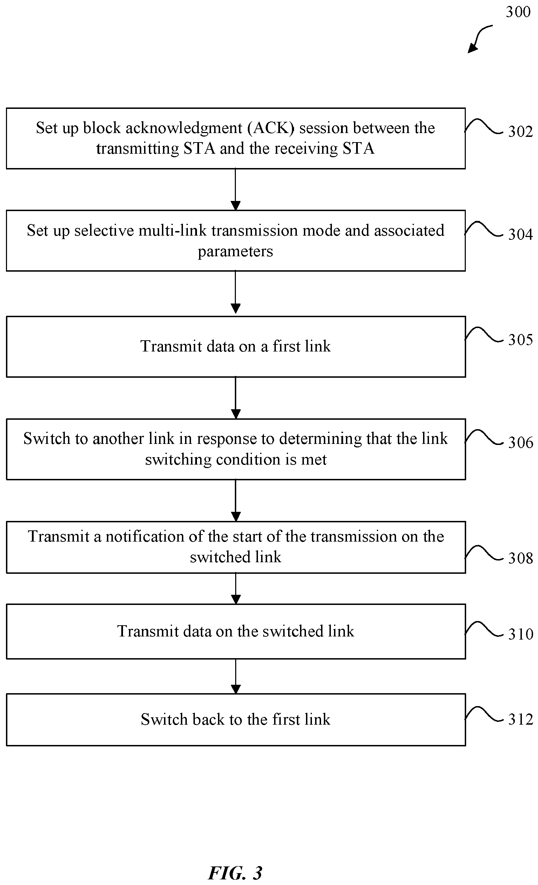

As discussed in more detail below with respect to FIGs. 3-5, processor 210 can implement different selective multi-link operation modes in the multi-link communication network of Figures 1A, 1B, and 2.

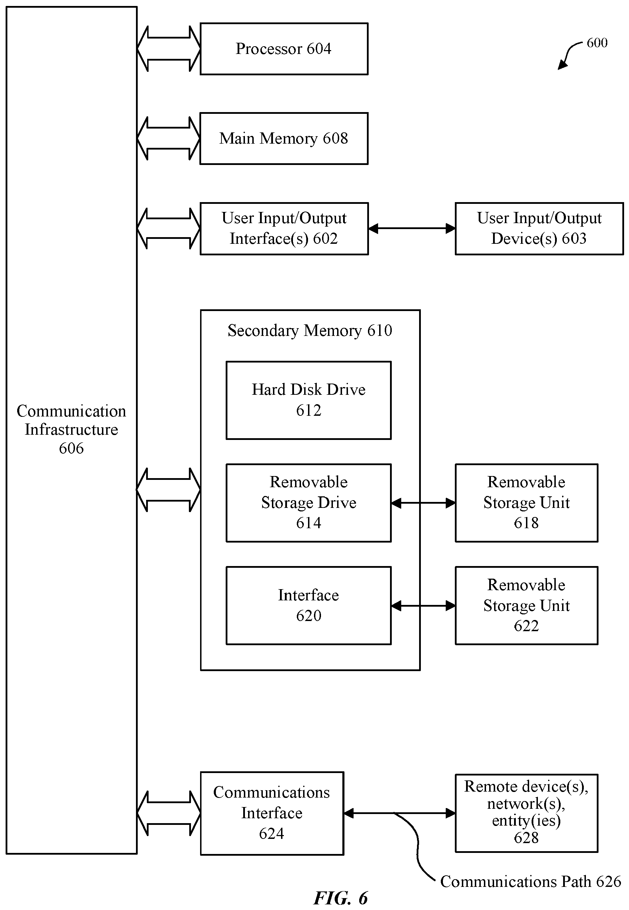

FIG. 3 illustrates an example method 300 for a wireless system supporting selective multi-link operations for a multi-link wireless communication network, according to some embodiments of the disclosure. As a convenience and not a limitation, FIG. 3 may be described with regard to elements of FIGs. 1, 2, 4, and 5. Method 300 may represent the operation of an electronic device (e.g., a station such as STA 120a of FIGs. 1A and 1B) implementing selective multi-link operation for a multi-link wireless communication network. Method 300 may also be performed by system 200 of FIG. 2 and/or computer system 600 of FIG. 6. But method 300 is not limited to the specific embodiments depicted in those figures and other systems may be used to perform the method as will be understood by those skilled in the art. It is to be appreciated that not all operations may be needed, and the operations may not be performed in the same order as shown in FIG. 3.

At 302, a block acknowledgment (ACK) session is set up between the transmitting STA (e.g., STA 120a) and the receiving STA (e.g., STA 120b). In some examples, the block ACK session is set up between STA 120a and STA 120b after an association procedure between these two STAs. For example, after STA 120a has associated with STA 120b (or vice versa), STA 120a can initiate and set up the block ACK session with STA 120b. According to some aspects of this disclosure, STA 120a can use the resident link to set up the block ACK session. This block ACK session can be shared between the resident link and any other alternative link(s), according to some examples. In other words, a sequence number associated with this block ACK session is used/shared by the resident link and any other alternative link(s). Additionally, an ACK bitmap for data (e.g., one or more packets) sent on different links for this block ACK session is used/shared by the resident link and any other alternative link(s).

At 304, a selective multi-link transmission mode and associated parameters are set up. According to some aspects of this disclosure, for example in mode 1 as discussed above, the transmitting STA (e.g., STA 120a) sets up the selective multi-link transmission mode and associated parameters independently from the receiving STA (e.g., STA 120b). In this example, a parameter set up by STA 120a can include a latency threshold T1 used as a link switching condition. The latency threshold T1 can be determined based on, for example, latency requirements of STA 120a, STA 120b, and/or the type of communication between these two STAs. Additionally, STA 120a can set up the resident link and the alternative link(s). In some examples, STA 120a does not communicate the selective multi-link transmission mode and associated parameters to STA 120b prior to any link switching. In these examples, STA 120b is awake (e.g., in active mode) on the resident link and the alternative link(s). In other words, the WLAN transceivers 220a-220n of STA 120b associated with corresponding resident link and the alternative link(s) are awake (e.g., in active mode) and ready to receive (and transmit) data.

As another example, in mode 2 and/or mode 3 of the selective multi-link operation, the selective multi-link transmission mode and associated parameters are set up as a collaborative operation between the transmitting STA (e.g., STA 120a) and the receiving STA (e.g., STA 120b). For example, after the STAs are associated and the block ACK session is set up, STA 120a and STA 120b communicate with each other to set up the selective multi-link transmission mode and associated parameters. In some examples, STA 120a and STA 120b can use the resident link to exchange information to set up the selective multi-link transmission mode and associated parameters. According to some aspects of the disclosure, STA 120a and STA 120b can exchange traffic flow identifier (TID) of the data that will use the selective multi-link operation. For example, STA 120a can send the TID to STA 120b to inform STA 120b which data (e.g., one or more packets) will use the selective multi-link operation. Using the received TID, STA 120b can prepare a data path processing for the data that uses the multi-link operation. According to some examples, the block ACK session (as set up in 302) for the specified TID is shared between the links (resident link and the alternative link(s)).

In some examples of mode 2 and/or mode 3 of the selective multi-link operation, one parameter, which is set up by STA 120a and/or STA 120b, can include the latency threshold T1 used as the link switching condition. In some examples, STA 120a can set up the latency threshold T1 and can communicate it to STA 120b. Additionally, or alternatively, the latency threshold T1 can be determined based on a negotiation between STA 120a and STA 120b. In some examples, STA 120b can use the latency threshold T1 to set up, for example, its buffers. The latency threshold T1 can be determined based on, for example, latency requirements of STA 120a, STA 120b, and/or the type of communication between these two STAs.

In some examples of mode 2 and/or mode 3 of the selective multi-link operation, an order of the links to use can also be set up. In some examples, STA 120a can set up the order of the links. In another example, STA 120a and STA 120b can negotiate to set up the order. In a non-liming example, STA 120a and STA 120b can negotiate that link 1 is the resident link, link 2 is the first alternative link, and link 3 is the second alternative link.

In some examples of mode 2 and/or mode 3 of the selective multi-link operation, one or more link switch delays can be set and/or exchanged between STA 120a and STA 120b. The link switch delay(s) can indicate the time delay(s) to switch from using one transceiver to use another transceiver for switching between links.

In some examples of mode 2 and/or mode 3 of the selective multi-link operation, a link switching tentative identifier can be set and/or exchanged between STA 120a and STA 120b. The link switching tentative identifier can indicate whether the STAs will switch to the next link on the link order after the data to be transmitted is transmitted, after a time period threshold is passed, or after a next link switching condition occurs.

In some examples of mode 2 of the selective multi-link operation, STA 120b is awake (e.g., in active mode) on the resident link and the alternative link(s). In other words, the WLAN transceivers 220a-220n of STA 120b associated with corresponding resident link and the alternative link(s) are awake (e.g., in active mode) and ready to receive (and transmit) data.

In some examples of mode 3 of the selective multi-link operations, STA 120b is awake (e.g., in active mode) on the resident link and not awake (e.g., in sleep mode such as in power save mode) on the alternative link(s). In other words, WLAN transceiver 220a (as one example) associated with the resident link is awake and ready to receive (and transmit) data. But WLAN transceivers 220b-220c of STA 120b associated with corresponding alternative link(s) are not awake and not ready to receive (and transmit) data (e.g., they are in sleep mode such as in power save mode).

In some examples of mode 4 of the selective multi-link operation (as discussed above), setting up the selective multi-link transmission mode and associated parameters can include negotiating wake/sleep cycles using target wake time (TWT) for the transceivers associated to corresponding links. Target wake time (TWT) is a power saving mechanism that can be used with communication techniques compatible with Institute of Electrical and Electronics Engineers (IEEE) 802.11 standards. For example, the TWT scheme (or technique) can be used within the WLAN and/or the multi-link wireless communication network of this disclosure. For example, an AP and/or one or more STAs can negotiate a specific time or a set of times for the STAs to access a medium. The TWT scheme can be used to control the amount of contention over the medium by allowing the STA to set up a periodic active/sleep (power save) schedule. The use of the TWT scheme allows the STAs to transition between an active mode and a sleep mode in a responsive manner, improving power consumption and latency.

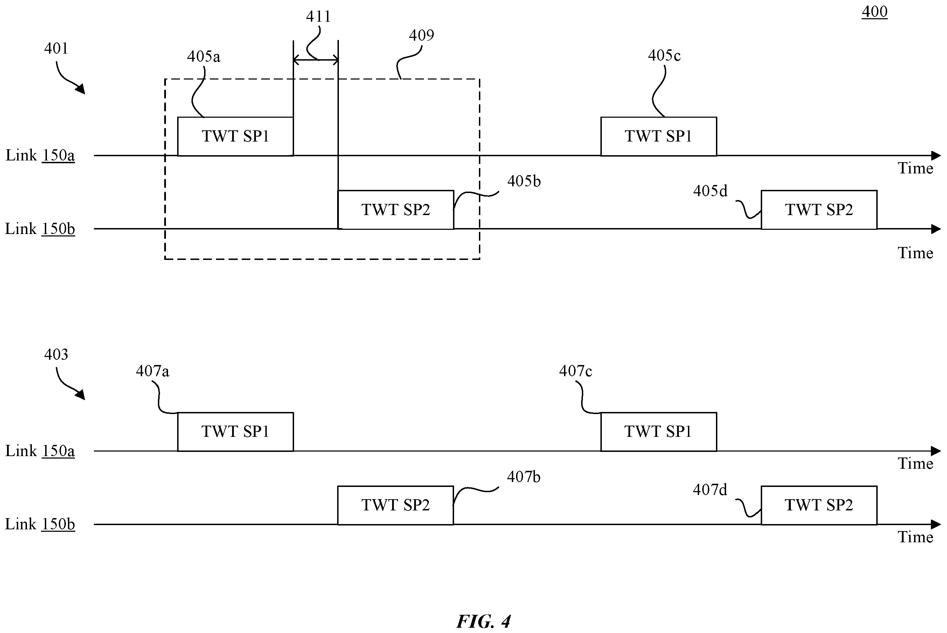

In this example of mode 4 of the selective multi-link operation, the transceivers of STA 120a and STA 120b can operate in a duty-cycle based on a setup between STA 120a and STA 120b. According to some examples, at 304, STA 120a and STA 120b can negotiate the wake/sleep cycles using TWT for the transceivers associated to corresponding links. According to some examples and as illustrated in FIG. 4, the TWT service periods (SP) can be grouped into TWT groups. A single group can be setup for multiple transceivers of STA 120a and STA 120b

FIG. 4 illustrates an exemplary TWT flow 400, according to some embodiments of the disclosure. TWT flow 400 can be based on the TWT schedule negotiated between STA 120a and STA 120b.

TWT flow 400 is illustrated as two TWT flows 401 and 403. In one example, TWT flow 401 is associated with the transmitting STA (e.g., STA 120a) and TWT flow 403 is associated with the receiving STA (e.g., STA 120b). TWT flow 401 includes TWT service periods (SPs) 405a and 405c on link 150a associated with, for example, transceiver 220a of STA 120a. TWT flow 401 also includes TWT service periods (SPs) 405b and 405d on link 150b associated with, for example, transceiver 220b of STA 120a. Similarly, TWT flow 403 includes TWT service periods (SPs) 407a and 407c on link 150a associated with, for example, transceiver 220a of STA 120b. TWT flow 403 also includes TWT service periods (SPs) 407b and 407d on link 150b associated with, for example, transceiver 220b of STA 120b.

Although two links are illustrated here, the aspects of this disclosure are not limited to two links and more links can also be used.

Service periods 405 are the time windows where STA 120a will be awake (e.g., in active mode) because STA 120a may transmit and/or receive packets during these service periods 405. Service periods 407 are the time windows where STA 120b will be awake (e.g., in active mode) because STA 120b may transmit and/or receive packets during these service periods 407. In this example, TWT SPs 405a and 405b are grouped into TWT group 409. Similarly, TWT SPs 405c and 405d can be grouped into one TWT group. TWT SPs 407a and 407b can be grouped into a single TWT group. TWT SPs 407c and 407d can be grouped into a single TWT group. According to some examples, TWT SPs 405 and 407 can have the same time duration. Alternatively, two or more of TWT SPs 405 and 407 can have different time durations.

In some examples of mode 4 of the selective multi-link operations, setting up the selective multi-link transmission mode and associated parameters can also include determining/setting a time difference between TWT SPs of a STA on different links. For example, the time difference 411 between TWT SPs 405a and 405b can be set such that time difference 411 is greater than a switch delay of switching between the transceivers associated with link 150a and link 150b. In some examples, time difference 411 can be the same for all TWT groups for STA 120a and STA 120b. In this example, time difference 411 can be greater than the switch delay of STA 120a and switch delay of STA 120b. In some examples, time difference 411 can be specific for a set of two links. For example, a first time difference 411 is determined for a first set of links 150a and 150b and a second time difference 411 is determined for a second set of links 150b and 150c.

According to some examples of mode 4 of the selective multi-link operation, transceivers of both STAs 120a and 120b switch to their corresponding links according to the TWT schedule. In some examples, transceivers of STAs 120a and 120b are not sleep (e.g., in power save mode) outside of the TWT SPs.

Returning to step 304, in some examples of mode 5 of the selective multi-link operation (as discussed above), STA 120a and/or STA 120b has a single WLAN transceiver that does not operate concurrently on multiple links. In this example, to operate on a particular link of the multiple links, the STA controls/configures the single WLAN transceiver to operate at the frequency of that particular link. In these examples, STA 120a and 120b can synchronize in time using, for example, beacons (which can include time stamp(s) for synchronization) or other synchronization protocols (such as, but not limited to, IEEE 802.1AS). In some examples, the synchronization can occur before method 300. In some examples of mode 5 of the selective multi-link operations, setting up the selective multi-link transmission mode and associated parameters can include setting up and exchanging additional parameters. According to some examples, STA 120a, alone or in combination with STA 120b, is configured to set a Time Out Value 1. The Time Out Value 1 defines a time period for which if STA 120b does not receive any data from STA 120a on the resident link (e.g., link 150a), STA 120b can control its transceiver (e.g., single WLAN transceiver) to switch to the next alternative link (e.g., link 150b).

Additionally, STA 120a, alone or in combination with STA 120b, is configured to set a Time Out Value 2. Time Out Value 2 defines a time period for which if STA 120b does not receive any data from STA 120a on the alternative link (e.g., link 150b), STA 120b can control its transceiver (e.g., single WLAN transceiver) to switch to the next alternative link (e.g., link 150c) if available, or to the resident link (e.g., link 150a).

Also, STA 120a, alone or in combination with STA 120b, is configured to set a beginning of service interval. A service interval can be a time period including one Time Out Value for each link. Also, STA 120a, alone or in combination with STA 120b, is configured to set a service interval period, which indicates the length (in time) of the service interval. In other words, a service interval period is the time period between the beginnings of two consecutive service intervals.

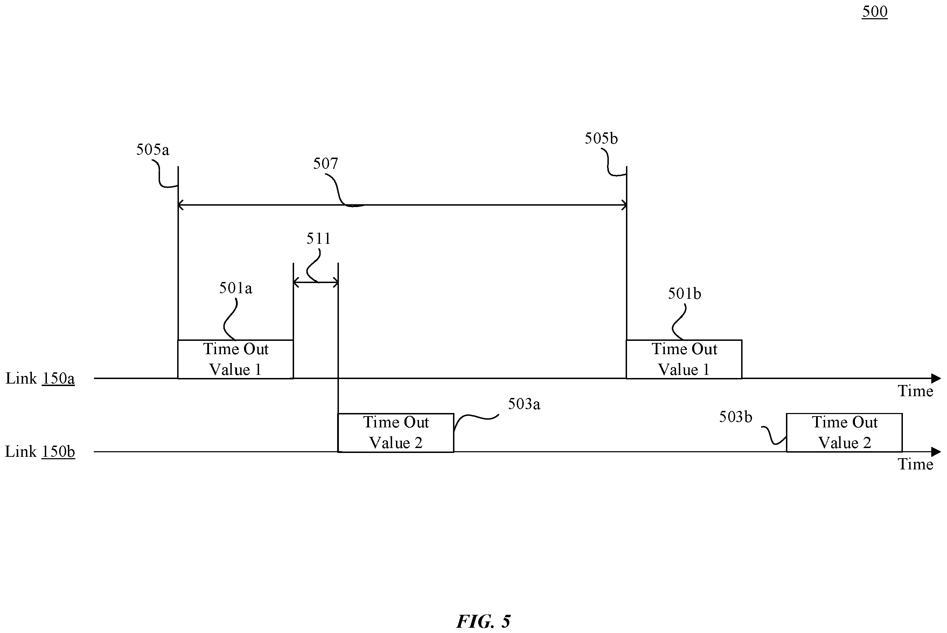

FIG. 5 illustrates an exemplary service interval flow 500, according to some embodiments of the disclosure. Service interval flow 500 can be based on the service interval schedule negotiated between STA 120a and STA 120b, as discussed above.

According to some examples, service interval flow 500 is associated with the receiving STA (e.g., STA 120b). Similar operation can be used for STA 120a and/or for both STAs 120a and 120b. Service interval flow 500 includes Time Out Values 501a and 501b associated with, for example, the single transceiver of STA 120b operating on the resident link (e.g., link 150a). Service interval flow 500 also includes Time Out Values 503a and 503b associated with, for example, the single transceiver of STA 120b operating on one of the alternative links (e.g., link 150b). Although two links are illustrated here, the aspects of this disclosure are not limited to two links and more links can also be used.

Time Out Values 501 indicate the time windows where STA 120b will be awake (e.g., in active mode) on the resident link because STA 120b may transmit and/or receive packets during these Time Out Values 501. Time Out Values 503 indicate the time windows where STA 120b will be awake (e.g., in active mode) on the alternative link because STA 120b may transmit and/or receive packets during these Time Out Values 503.

In some examples of mode 5 of the selective multi-link operation, setting up the selective multi-link transmission mode and associated parameters can also include determining/setting and/or exchanging a time difference between Time Out Values of a STA on different links. For example, the time difference 511 between Time Out Values 501a and 503a can be set such that time difference 511 is greater than a switch delay of switching the single transceiver between link 150a and link 150b. In some examples, time difference 511 can be the same for all Time Out Values for STA 120a and STA 120b. In this example, time difference 511 can be greater than the switch delay of STA 120a and switch delay of STA 120b. In some examples, time difference 511 can be specific for a set of two links. For example, a first time difference 511 corresponding to a first set of links 150a and 150b and a second time difference 511 corresponding to a second set of links 150b and 150c.

Additionally, or alternatively, setting up the selective multi-link transmission mode and associated parameters can also include determining/setting and/or exchanging the beginning of service interval 505a and/or 505b. Also, setting up the selective multi-link transmission mode and associated parameters can also include determining/setting a service interval period 507, which can indicate the length (in time) of the service interval. In other words, a service interval period 507 is the time period between the beginnings 505a and 505b of two consecutive service intervals.

According to some examples, Time Out Values 501 and 503 can have the same time duration. Alternatively, two or more of Time Out Values 501 and 503 can have different time durations.

According to some examples of mode 5 of the selective multi-link operation, the single transceiver of STA 120b switches to the corresponding links according to the service interval schedule. According to some examples, setting up and scheduling the Time Out Values can be similar to setting up and scheduling the TWT scheme of mode 4 of the selective multi-link operation as discussed above. In this example, the values of TWT SPs can be re-defined as the Time Out Values. Alternatively, a new information element (IE) can be used to set up and schedule the Time Out Values. This IE can include one or more of beginning of service interval, service interval period, Time Out Value 1, Time Out Value 2, Time Out Value 3, etc.

Returning to method 300 of FIG. 3, at 305, data (e.g., one or more packets are transmitted on a first link. In some examples, the first link can be the resident link. For example, STA 120a is communicating with STA 120b on, for example, link 150a. In this example, STA 120a is using, for example, transceiver 220a for sending data (e.g., one or more packets) to STA 120b.

At 306, a switch is made to another link in response to determining that the link switching condition is met. According to some aspects, when STA 120a attempts to transmit, for example, more data to STA 120b on, for example, link 150a, STA 120a checks link 150a to avoid collision. If STA 120a detects (e.g., "hears") data (e.g., a packet) from other stations is being transmitted on link 150a, STA 120a pauses its transmission of backoff data and/or new data. STA 120a can resume its transmission after the data detected on link 150a is transmitted and after a time specified (referred herein as channel reservation value) in the data detected on link 150a is passed. For example, the specified time can be a time indicated in the MAC header (e.g., a time/counter in the duration field of the MAC header - network allocation vector (NAV)).

According to some aspects of this disclosure, if STA 120a detects a packet on link 150a, STA 120a can determine the channel reservation value associated with the packet. STA 120a can compare the channel reservation value with the latency threshold T1. In response to the channel reservation value being greater than the latency threshold T1, STA 120a can switch to link 150b. In some examples, after switching to link 150b, STA 120a can determine whether a packet is being transmitted on link 150b by another station. If so, STA 120a can determine the channel reservation value associated with the packet on link 150b and can compare the channel reservation value associated link 150b with the latency threshold T1. In response to the channel reservation value associated with link 150b being greater than the latency threshold T1, STA 120a can switch to link 150c. In some examples, STA 120a can perform this operation for all or a subset of the available links and choose the link with the smallest channel reservation value.

According to some examples, STA 120a can switch to the next link in the set of links set up by STA 120a (e.g., as discussed above in mode 1 of the selective multi-link operations). Alternatively, STA 120a can switch to the next link in the set of links set by the order of the links set by STA 120a and STA 120b (e.g., as discussed above in mode 2 and/or mode 3 of the selective multi-link operations.)

According to some aspects of the disclosure, the switching from the first link to the second link can include using a transceiver (e.g., transceiver 220b) associated with the second link instead of using the transceiver (e.g., transceiver 220a) associated with the first link. Additionally, or alternatively, the switching from the first link to the second link can include controlling a single transceiver (e.g., transceiver 220n) to operate at the second link instead of operating at the first link.

At 308, a notification of the start of the transmission on the switched link is transmitted. According to some examples, after STA 120a switches to the next link (e.g., the next alternative link or the resident link), STA 120a can send one or more packets, on the switched link, to STA 120b before the data transmission is started. In some examples, STA 120a can receive a response (to the notification) from STA 120b before the data transmission is started. According to some examples, the one or more packets can include Request to Send (RTS) and Clear to Send (CTS) packets used in, for example, carrier sense multiple access protocols. In some examples (e.g., mode 1 of the selective multi-link operation), STA 120a sends the one or more packets to verify that STA 120b is available to receive the data.

In some examples of mode 2 and/or mode 3 of the selective multi-link operation, STA 120a sends the one or more packets (and/or STA 120a and STA 120b exchange the one or more packets) to verify that STA 120b is available to receive the data and/or to confirm that STA 120a and STA 120b are operating on the same link.

As discussed above, in some examples of mode 3 of the selective multi-link operations, STA 120b is awake (e.g., in active mode) on the resident link and not awake (e.g., in sleep mode such as power save mode) on the alternative link(s). In these examples, and before 308, STA 120a can be configured to use as out-of-band mechanism (e.g., send one or more out-of-band packets) to wake up STA 120b on the link (e.g., the next alternative link) on which the data transmission is to occur. For example, STA 120a can be configured to use the out-of-band mechanism to wake up the WLAN transceiver 220b of STA 120b associated with corresponding alternative link to receive (and transmit) data. In a nonlimiting example, STA 120a and/or STA 120b can use Bluetooth™ packets as the out-of-band mechanism to wake up STA 120b. However, STA 120a and/or STA 120b can use other methods to wake up STA 120b.

In some examples of mode 4 of the selective multi-link operations, the switch to the other link (e.g., one of the alternative link(s)) includes switching to the next TWT SP on the next link. For example, as illustrated in FIG. 4, if STA 120a is not able to transmit its data on TWT SP 405a on link 150a, STA 120a switches to TWT SP 405b on link 150b. Similarly, STA 120b switches from TWT SP 407a to TWT SP 407b. In this example, different TWT SPs within a TWT group can provide back transmission time in case data cannot be transmitted within one SP in the same TWT group. Also, the exemplary TWT schedule and setup allows that the transceivers of STA 120a and/or STA 120b to be awake (e.g., active) at particular time and therefore, saving power without using out-of-band mechanisms.

At 310, the data transmission is started on the switched link. For example, STA 120a can transmit the data (e.g., one or more packets) on the switched link. In other words, STA 120a and STA 120b can resume their communication on the switched link.

At 312, the communication between STA 120a and STA 120b can switch back to the first link. In some examples, the first link can be the resident link. Alternatively, the first link can be another alternative link. Additionally, or alternatively, the first link can be resident link, but the communication between STA 120a and STA 120b can switch from one alternative link to another alternative link. In some examples, the communication between STA 120a and STA 120b can switch in response to one or more switching conditions being met. For example, the communication between STA 120a and STA 120b can switch back to the resident link in response to one or more switching conditions being met. In one exemplary aspect of the disclosure, STA 120a can successfully transmit its data (e.g., packets) to STA 120b and can successfully receive ACK(s) from STA 120b. After this successful transmission of data on the switched link (e.g., one of the alternative link(s)), STA 120a can switch back to the resident link and method 300 can be repeated.

Additionally, or alternatively, STA 120a can transmit its data to STA 120b on the switched link (e.g., one of the alternative link(s)), but STA 120a does not receive one or more ACK(s) for the transmitted data. In some examples, STA 120a does not receive the ACK(s) because STA 120b did not receive the data and/or received the data with error. If STA 120a does not receive the ACK(s), STA 120a can retry transmitting the packet(s) that was not acknowledged. According to some aspects of this disclosure, STA 120a can switch back to the resident link (and method 300 can be repeated) in response to the number of retries reaching a retry limit.

Additionally, or alternatively, STA 120a can switch back to the resident link (and method 300 can be repeated) in response to a transmission time on the switched link (e.g., one of the alternative link(s)) reaching a time period threshold.

In some examples, after switching back to, for example, the resident link (or another alternative link), STA 120a and STA 120b can continue communicating.

In some examples of mode 1 of the selective multi-link operation, STA 120a can determine the condition for switching back to the resident link by its own (e.g., without exchanging/communicating the condition to STA 120b). Additionally, or alternatively, in some examples of mode 2 and/or mode 3 of the selective multi-link operation, the condition for switching back to the resident link is determined based on the link switching tentative identifier discussed above.

In some examples of mode 4 of the selective multi-link operations, the switch back to the resident link can include switching back to the resident link in the next TWT group. For example, as illustrated in FIG. 4, if STA 120a transmits its data on TWT SP 405b on link 150b, STA 120a switches to TWT SP 405c on link 150b in the next TWT group. Similarly, STA 120b switches from TWT SP 407b to TWT SP 407c in the next TWT group.

In some examples of mode 5 of the selective multi-link operations, the switch back to the resident link can include switching back to the resident link in the next Time Out Value. For example, as illustrated in FIG. 5, if STA 120b receives data on Time Out Value 503a on link 150b, STA 120b switches to Time Out Value 503b on link 150a.

According to some aspects of this disclosure, and to support the selective multi-link operation on a multi-link communication network, one or more information elements (IE) can be used. An information element (IE) can be a structure used to communicate information between devices. For example, the IE(s) can be used by STA 120a and STA 120b during the probe request and/or association request. Additionally, or alternatively, the IE can be used by STA 120a and STA 120b during a peer-to-peer association.

According to some examples, STAs 120A and 120b can communicate to each other their capabilities. For example, each STA can inform the other STA what modes of selective multi-link operation each STA supports and/or what are the parameters for each supported mode.

According to some examples, one IE can include a selective multi-link capability information element (IE) including one or more fields of (1) selective transmission mode supported and (2) a switch delay. The selective transmission mode supported field can indicate which modes of selective transmission STA 120a and/or STA 120b support. The switch delay can indicate a switch delay value as discussed above for STA 120a and/or STA 120b. The selective multi-link capability information element (IE) can include other fields and information.

According to some examples, the IE can include a selective multi-link setup information element (IE) including one or more fields of (1) resident link in use, (2) alternative link(s) in use and order of the link(s) in switching, (3) TID(s) that are allowed to use selective multi-link switch scheme, (4) out-of-link wake up latency, (5) link switching tentative identifier. In some examples, the resident link in use field can indicate the main link that is used for communication. The alternative link(s) in use field can indicate the other links that can be used as alternative/backup for communication. The order of the link(s) in switching field can indicate the order in which the links are to be switched. The out-of-link wake up latency can indicate the delay for a transceiver (that is sleep) to wake up and operate at a link. The link switching tentative identifier field can indicate whether the STAs will switch to the next link on the link order after the data to be transmitted is transmitted, after a time period threshold is passed, or after a next link switching condition occurs.

According to some embodiments some modifications can be made to TWT information element. In some examples, these modifications can be for mode 4 and/or mode 5 of the selective-multi link operations. The TWT information element is used for exchanging and/or negotiating TWT parameters between STA 120a and STA 120b. According to some examples, for mode 4 of the selective-multi link operations of this disclosure, the modification to TWT information element can include defining an indication that the TWT is for group TWT using, for example, one of the reserved bits in TWT IE Control field. If this bit is set, then TWT parameters can be redefined to indicate that the TWT parameters in the TWT IE indicate the TWT on the resident link. Also, the TWT IE can specify that TWT on alternate links are separated in time by switch delay.

According to some examples, for mode 4 of the selective-multi link operations of this disclosure, the modification to TWT information element can include defining an indication that the TWT is for mode 5 operation using, for example, another reserved bit in TWT IE Control field. If this bit this set, then TWT parameters can be redefined to indicate that the TWT service period duration indicates Time Out Value to switch to the next link. Alternatively, a new Information element and action frame can be defined to carry one or more of beginning of service interval, service interval period, Time Out Value 1, Time Out Value 2, Time Out Value 3, etc.

Various embodiments can be implemented, for example, using one or more computer systems, such as computer system 600 shown in FIG. 6. Computer system 600 can be any well-known computer capable of performing the functions described herein such as devices 110, 120 of FIGs. 1A and 1B, or 200 of FIG. 2. Computer system 600 includes one or more processors (also called central processing units, or CPUs), such as a processor 604. Processor 604 is connected to a communication infrastructure 606 (e.g., a bus.) Computer system 600 also includes user input/output device(s) 603, such as monitors, keyboards, pointing devices, etc., that communicate with communication infrastructure 606 through user input/output interface(s) 602. Computer system 600 also includes a main or primary memory 608, such as random access memory (RAM). Main memory 608 may include one or more levels of cache. Main memory 608 has stored therein control logic (e.g., computer software) and/or data.

Computer system 600 may also include one or more secondary storage devices or memory 610. Secondary memory 610 may include, for example, a hard disk drive 612 and/or a removable storage device or drive 614. Removable storage drive 614 may be a floppy disk drive, a magnetic tape drive, a compact disk drive, an optical storage device, tape backup device, and/or any other storage device/drive.

Removable storage drive 614 may interact with a removable storage unit 618. Removable storage unit 618 includes a computer usable or readable storage device having stored thereon computer software (control logic) and/or data. Removable storage unit 618 may be a floppy disk, magnetic tape, compact disk, DVD, optical storage disk, and/ any other computer data storage device. Removable storage drive 614 reads from and/or writes to removable storage unit 618 in a well-known manner.

According to some embodiments, secondary memory 610 may include other means, instrumentalities or other approaches for allowing computer programs and/or other instructions and/or data to be accessed by computer system 600. Such means, instrumentalities or other approaches may include, for example, a removable storage unit 622 and an interface 620. Examples of the removable storage unit 622 and the interface 620 may include a program cartridge and cartridge interface (such as that found in video game devices), a removable memory chip (such as an EPROM or PROM) and associated socket, a memory stick and USB port, a memory card and associated memory card slot, and/or any other removable storage unit and associated interface.

Computer system 600 may further include a communication or network interface 624. Communication interface 624 enables computer system 600 to communicate and interact with any combination of remote devices, remote networks, remote entities, etc. (individually and collectively referenced by reference number 628). For example, communication interface 624 may allow computer system 600 to communicate with remote devices 628 over communications path 626, which may be wired and/or wireless, and which may include any combination of LANs, WANs, the Internet, etc. Control logic and/or data may be transmitted to and from computer system 600 via communication path 626.

The operations in the preceding embodiments can be implemented in a wide variety of configurations and architectures. Therefore, some or all of the operations in the preceding embodiments may be performed in hardware, in software or both. In some embodiments, a tangible, non-transitory apparatus or article of manufacture includes a tangible, non-transitory computer useable or readable medium having control logic (software) stored thereon is also referred to herein as a computer program product or program storage device. This includes, but is not limited to, computer system 600, main memory 608, secondary memory 610 and removable storage units 618 and 622, as well as tangible articles of manufacture embodying any combination of the foregoing. Such control logic, when executed by one or more data processing devices (such as computer system 600), causes such data processing devices to operate as described herein.

Based on the teachings contained in this disclosure, it will be apparent to persons skilled in the relevant art(s) how to make and use embodiments of the disclosure using data processing devices, computer systems and/or computer architectures other than that shown in FIG. 6. In particular, embodiments may operate with software, hardware, and/or operating system implementations other than those described herein.

It is to be appreciated that the Detailed Description section, and not the Summary and Abstract sections, is intended to be used to interpret the claims. The Summary and Abstract sections may set forth one or more, but not all, exemplary embodiments of the disclosure as contemplated by the inventor(s), and thus, are not intended to limit the disclosure or the appended claims in any way.

While the disclosure has been described herein with reference to exemplary embodiments for exemplary fields and applications, it should be understood that the disclosure is not limited thereto. Other embodiments and modifications thereto are possible, and are within the scope of the disclosure. For example, and without limiting the generality of this paragraph, embodiments are not limited to the software, hardware, firmware, and/or entities illustrated in the figures and/or described herein. Further, embodiments (whether or not explicitly described herein) have significant utility to fields and applications beyond the examples described herein.

Embodiments have been described herein with the aid of functional building blocks illustrating the implementation of specified functions and relationships thereof. The boundaries of these functional building blocks have been arbitrarily defined herein for the convenience of the description. Alternate boundaries can be defined as long as the specified functions and relationships (or equivalents thereof) are appropriately performed. In addition, alternative embodiments may perform functional blocks, steps, operations, methods, etc. using orderings different from those described herein.

References herein to "one embodiment," "an embodiment," "an example embodiment," or similar phrases, indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it would be within the knowledge of persons skilled in the relevant art(s) to incorporate such feature, structure, or characteristic into other embodiments whether or not explicitly mentioned or described herein.

The breadth and scope of the disclosure should not be limited by any of the above-described exemplary embodiments, but should be defined only in accordance with the following claims and their equivalents.

As described above, aspects of the present technology may include the gathering and use of data available from various sources, e.g., to improve or enhance functionality. The present disclosure contemplates that in some instances, this gathered data may include personal information data that uniquely identifies or can be used to contact or locate a specific person. Such personal information data can include demographic data, location-based data, telephone numbers, email addresses, Twitter ID's, home addresses, data or records relating to a user's health or level of fitness (e.g., vital signs measurements, medication information, exercise information), date of birth, or any other identifying or personal information. The present disclosure recognizes that the use of such personal information data, in the present technology, may be used to the benefit of users.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should only occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of, or access to, certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, the present technology may be configurable to allow users to selectively "opt in" or "opt out" of participation in the collection of personal information data, e.g., during registration for services or anytime thereafter. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data a city level rather than at an address level), controlling how data is stored (e.g., aggregating data across users), and/or other methods.

Therefore, although the present disclosure may broadly cover use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data.

Aspects of the disclosure are set out in the following numbered clauses:
1. An electronic device, comprising: a transceiver configured to communicate over a wireless network; and a processor communicatively coupled to the transceiver and configured to: communicate, using the transceiver, with a second electronic device on a first link of the wireless network; determine, based on a channel reservation value, whether a link switch condition is met; and in response to determining that the link switch condition is met, communicate with the second electronic device on a second link of the wireless network, wherein the first link is separate from the second link.
2. The electronic device of clause 1, wherein to determine whether the link switch condition is met the processor is configured to: detect a packet on the first link; determine the channel reservation value associated with the detected packet; and compare the channel reservation value with a latency threshold.
3. The electronic device of clause 2, wherein the processor is configured to determine that the link switch condition is met when the channel reservation value exceeds the latency threshold.
4. The electronic device of clause 1, further comprising: a second transceiver configured to operate on the second link, wherein the processor is configured to communicate with the second electronic device using the second transceiver on the second link of the wireless network.
5. The electronic device of clause 1, wherein in response to determining that the link switch condition is met, the processor is configured to control the transceiver to switch from operating on the first link to operating on the second link.
6. The electronic device of clause 1, wherein the processor is configured to: transmit one or more packets to the second electronic device on the second link of the wireless network; and in response to determining that a second switch condition is met, switch to communicating with the second electronic device on the first link of the wireless network.
7. The electronic device of clause 1, wherein the processor is further configured to transmit a notification to, and receive a response from, the second electronic device on the second link before transmitting, on the second link, one or more data packets to the second electronic device.
8. The electronic device of clause 1, wherein the processor is further configured to: transmit, using a second transceiver, an out-of-band packet to the second electronic device to activate a transceiver of the second electronic device configured to operate on the second link.
9. The electronic device of clause 1, wherein the processor is configured to: communicate with the second electronic device on the first link during a first target wake time (TWT) service period (SP) of a TWT group, and communicate with the second electronic device on the second link during a second TWT SP of the TWT group.
10. The electronic device of clause 1, wherein the processor is configured to: communicate with the second electronic device on the first link during a first time period associated with a first Time Out Value, and communicate with the second electronic device on the second link during a second time period associated with a second Time Out Value.
11. A method comprising, at a first electronic device: communicating with a second electronic device, using a transceiver of a first electronic device, on a first link of a wireless network; determining a channel reservation value associated with a detected packet received on the first link; comparing the channel reservation value with a latency threshold; and in response to the channel reservation value exceeding the latency threshold, communicating with the second electronic device on a second link of the wireless network, wherein the second link is separate from the first link.
12. The method of clause 11, wherein the transceiver is configured to operate on the first link and the communicating with the second electronic device on the second link comprises using a second transceiver configured to operate on the second link.
13. The method of clause 11, further comprising: controlling the transceiver of the first electronic device to switch from operating on the first link to operating on the second link in response to the channel reservation value exceeding the latency threshold.
14. The method of clause 11, further comprising: transmitting one or more packets to the second electronic device on the second link of the wireless network; and in response to determining that a second switch condition is met, switching to communicate with the second electronic device on the first link of the wireless network.
15. The method of clause 11, further comprising: transmitting a notification to, and receiving a response from, the second electronic device on the second link before transmitting, on the second link, one or more data packets to the second electronic device.
16. The method of clause 11, further comprising: transmitting, using a second transceiver, an out-of-band packet to the second electronic device to activate a transceiver of the second electronic device configured to operate on the second link.
17. The method of clause 11, wherein: communicating with the second electronic device on the first link comprises communicating during a first target wake time (TWT) service period (SP) of a TWT group, and communicating with the second electronic device on the second link of the wireless network comprises communicating during a second TW TSP of the TWT group.
18. The method of clause 11, wherein: communicating with the second electronic device on the first link comprises communicating during a first time period associated with a first Time Out Value, and communicating with the second electronic device on the second link of the wireless network comprises communicating during a second time period associated with a second Time Out Value.
19. A non-transitory computer-readable medium storing instructions that, when executed by a processor of an electronic device, cause the processor to perform operations comprising: communicating, using a transceiver of the electronic device, with a second electronic device on a first link of a wireless network; determining a channel reservation value associated with a detected packet on the first link; and in response to the channel reservation value exceeding a latency threshold, communicating with the second electronic device on a second link of the wireless network, wherein the second link is separate from the first link.
20. The non-transitory computer-readable medium of clause 19, the operations further comprising: transmitting one or more packets to the second electronic device on the second link of the wireless network and; and in response to determining that a second switch condition is met, switching to communicate with the second electronic device on a third link of the wireless network, the third link being different from the first link and the second link.

## Claims

1. A method comprising, at a first electronic device:
communicating with a second electronic device, using a transceiver of the first electronic device, on a first link of a wireless network;
determining, based on a channel reservation value, whether a link switch condition is met; and
in response to determining that the link switch condition is met, communicating with the second electronic device on a second link of the wireless network, wherein the second link is separate from the first link.

2. The method of claim 1, wherein determining whether the link switch condition is met comprises:
detecting a packet on the first link;
determining the channel reservation value associated with the detected packet; and
comparing the channel reservation value with a latency threshold.

3. The method of claim 2, wherein determining that the link switch condition is met comprises determining that the channel reservation value exceeds the latency threshold.

4. The method of any preceding claim, wherein the transceiver is configured to operate on the first link and the communicating with the second electronic device on the second link comprises using a second transceiver configured to operate on the second link.

5. The method of any preceding claim, further comprising:
controlling the transceiver of the first electronic device to switch from operating on the first link to operating on the second link in response to the channel reservation value exceeding the latency threshold.

6. The method of any preceding claim, further comprising:
transmitting one or more packets to the second electronic device on the second link of the wireless network; and
in response to determining that a second switch condition is met, switching to communicate with the second electronic device on the first link of the wireless network.

7. The method of any preceding claim, further comprising:
transmitting a notification to, and receiving a response from, the second electronic device on the second link before transmitting, on the second link, one or more data packets to the second electronic device.

8. The method of any proceeding claim, further comprising:
transmitting, using a second transceiver, an out-of-band packet to the second electronic device to activate a transceiver of the second electronic device configured to operate on the second link.

9. The method of any preceding claim, wherein:
communicating with the second electronic device on the first link comprises communicating during a first target wake time (TWT) service period (SP) of a TWT group, and
communicating with the second electronic device on the second link of the wireless network comprises communicating during a second TW TSP of the TWT group.

10. The method of any preceding claim, wherein:
communicating with the second electronic device on the first link comprises communicating during a first time period associated with a first Time Out Value, and
communicating with the second electronic device on the second link of the wireless network comprises communicating during a second time period associated with a second Time Out Value.

11. An electronic device, comprising:
a transceiver configured to communicate over a wireless network; and
a processor communicatively coupled to the transceiver and configured to perform the method of any of claims 1 to 10.

12. The electronic device of claim 11, further comprising:
a second transceiver configured to operate on the second link,
wherein the processor is configured to communicate with the second electronic device using the second transceiver on the second link of the wireless network.

13. A non-transitory computer-readable medium storing instructions that, when executed by a processor of an electronic device, cause the processor to perform the method of any of claims 1 to 10.
